# EUROPEAN PATENT SPECIFICATION

(11) **EP 3 803 090 B1**
(45) Date of publication and mention of the grant of the patent: **21.09.2022**
(21) Application number: 18730700.4
(22) Date of filing: 05.06.2018
(51) Int. Cl.: F02M 21/02, F16L 37/56, F16K 31/04, F16L 9/18

(54) **A GAS VALVE UNIT**
DOPPELWANDIGE GASVENTILEINHEIT
UNITÉ DE SOUPAPE POUR GAZ À DOUBLE PAROI

(43) Date of publication of application: 14.04.2021
(73) Proprietor: Wärtsilä Finland Oy, 65100 Vaasa (FI)
(72) Inventor: WIDJESKOG, Klaus, 65380 Vaasa (FI); KUUSISAARI, Marko, 65380 Vaasa (FI); HÖGNABBA, Tomas, 65380 Vaasa (FI)
(74) Representative: Genip Oy
(86) International application number: PCT/EP2018/064737
(87) International publication number: WO 2019/233560

(56) References cited:
- WO-A1-97/09550
- WO-A1-2017/220106
- WO-A2-2004/040156
- WO-A2-2012/150379
- KR-A- 20160 087 620
- US-A1- 2009 056 507

## Description

### Technical field

The present invention relates to a gas valve unit comprising a pipe and at least a valve arranged to the pipe, and a gas tight enclosure, enclosing the pipe and the valve, and being provided with an inlet and an outlet, in which gas valve unit the pipe is arranged to extend inside the enclosure from the inlet of the enclosure to the outlet of the enclosure, according to the preamble of claim 1.

### Background art

A natural gas as a fuel for internal combustion engines in marine vessels has become more common because of the environmental reasons. At the same time the equipment for handling and regulating gas fuel is subjected to stringent safety regulations. Fuel systems for feeding gaseous fuel to an internal combustion engine in a marine vessel are commonly constructed such that a fuel supply line runs inside, i.e. is enclosed by a barrier wall system, in order to prevent direct leakage to surrounding should the fuel supply line leak. It is also known to provide such a fuel system with a separate gas valve unit before each engine, into which certain components of the fuel system, like shut-off valves and pressure regulators, are assembled in centralized manner. The gas valve unit comprises an enclosure formed by a barrier wall system.

EP 2032428 B1 discloses a fuel system for gas driven piston engine in a marine vessel, which gas is stored in at least one fuel storage tank in the vessel as liquefied gas. The fuel feeding system comprises a separate fuel feed tank in which the gas is in liquid phase and at elevated pressure. The gas is also in liquid phase in the fuel storage tank, in which, however, prevails only the hydrostatic pressure caused by the liquid gas. In this kind of fuel system situations may occur in which excess gas need to purged from the tank, an often that means admission of gas into the atmosphere.

WO 2017/220106 A1 discloses a gas valve unit, which is connected to a gas introduction pipe and a gas consumer in a marine vessel. The gas valve unit comprises a valve member configured to operate as a closing valve for the fuel pipe. The gas valve unit are provided with an enclosure of collecting possible leak gas and preventing that gas to spread directly to the surrounding air.

In such a gas valve unit the valve and its actuator are installed inside the pressure proof enclosure. In such case access to the actuator requires opening of the enclosure. Any access door of the enclosure must be sealed accordingly to endure the required pressure. This in turn means that the attachment and sealing must be very robust, and therefore the opening of the enclosure for service the instruments inside the enclosure is time consuming and laborious.

WO 2004/040156 A2 discloses a device for the transmission of a rotary motion from a primary shaft to a secondary shaft, allowing the volume housing the primary shaft to be separated in a gas tightly manner from the volume housing the secondary shaft. According to the publication the device can be used in rotating valve stems of e.g. ball valves. The device provides gas tight separation of the primary and the secondary drive shafts by an enclosure which is enclosing the transmission system.

WO 2012/150379 A2 discloses a liquefied gas outlet system for liquefied gas tank to discharge liquefied gas below its surface level in the tank. It discloses a valve unit in a separate cavity arranged to an enclosure that is an LNG tank. The cavity forms a space separated from the LNG tank inner volume and extends through the upper wall of the tank to the valve unit. Operating shaft of the valve unit can be led via the cavity from outside the tank to the valve unit.

An object of the invention is to provide a valve unit in which the maintenance of the valve actuator is considerably improved compared to the prior art solutions.

### Disclosure of the Invention

Objects of the invention can be met substantially as is disclosed in the independent claim and in the other claims, describing more details of different embodiments of the invention.

According to an embodiment of the invention a gas valve unit comprises a pipe and at least a valve arranged to the pipe, and a gas tight enclosure, enclosing the pipe and the valve, and being provided with an inlet and an outlet, in which gas valve unit the pipe is arranged to extend inside the enclosure from the inlet of the enclosure to the outlet of the enclosure, wherein
- the valve comprising a drive shaft having a first axis of rotation, and the valve is operable by subjecting a rotational movement to the drive shaft of the valve,
- an actuating shaft having a second axis of rotation,
- a shaft lead-through unit releasably connected to the enclosure in gas tight manner, into which shaft lead-through unit the drive shaft is arranged so as to extend from inside to outside of the enclosure, and
- the drive shaft and the actuating shaft are arranged in force transmission connection with each other by a coupling which is configured to allow mutual lateral displacement of the ends of the drive shaft and the actuating shaft.

This way the first axis of rotation and the second axis of rotation are may be at a distance from each other

According to an embodiment of the invention the shaft lead-through unit comprises a flange part provided with a cylindrical opening into which the drive shaft is assembled rotationally and in gas tight manner.

According to an embodiment of the invention the shaft lead-through unit is configured to be assembled and/or disassembled from outside the enclosure.

According to an embodiment of the invention the actuating shaft is configured to be assembled and/or disassembled from out-side the enclosure.

According to an embodiment of the invention the coupling comprise a first engagement hub at the end of the drive shaft of the valve and a second engagement hub at the end of the actuating shaft and a floating member between the first and the second engagement hub.

According to an embodiment of the invention the floating member has a first form engagement with the first engagement hub configured to enable transmission of torque between the floating member and the first engagement hub, and the floating member has a second form engagement with the second engagement hub configured to enable transmission of torque between the second coupling engagement hub to the floating member.

According to an embodiment of the invention the first form engagement is configured such that the floating member is movable in first lateral direction only in respect to the first axis of rotation and the second form engagement is configured such that the floating member is movable in second lateral direction only in respect to the second axis of rotation.

According to an embodiment of the invention the first engagement hub of the coupling is provided with a lateral rectangular recess at its end face, and the floating member is rectangular having its sides shorter than sides of the recess such that the floating member is fitted into the recess, and the floating member is provided with rectangular cut-out circumscribed by a periphery section, and the second engagement hub is formed to be laterally rectangular and it has a side length shorter than the sides of the recess in the floating member, and the second engagement hub is arranged into the recess of the floating member.

According to an embodiment of the invention the second engagement hub is arranged to extend axially inside the first engagement hub and the floating member.

According to an embodiment of the invention the floating member has a first form engagement with the first engagement hub configured to enable transmission of torque between the floating member and the first engagement hub, and the floating member has a second form engagement with the second engagement hub configured to enable transmission of torque between the second coupling engagement hub to the floating member, and the second engagement hub is arranged to extend axially inside the first engagement hub and the floating member.

According to an embodiment of the invention the first form engagement and second form engagement are laterally nested.

According to an embodiment of the invention the enclosure is of tubular form and it is arranged coaxially with the pipe.

According to an embodiment of the invention the enclosure comprises a tubular body and a sleeve part, into which the shaft lead-through unit is releasably connected, the sleeve part having a diameter different from the diameter of the tubular body such that the sleeve part is axially movable in respect to the body part and that the shaft lead-through unit is releasably connected to the sleeve part of the enclosure.

According to an embodiment of the invention the enclosure is arranged coaxially with the pipe, and that the enclosure comprises a body and a sleeve part, wherein the sleeve part is axially movable in respect to the body part, and that the shaft lead-through unit is releasably connected to the sleeve part of the enclosure.

The exemplary embodiments of the invention presented in this patent application are not to be interpreted to pose limitations to the applicability of the appended claims. The verb "to comprise" is used in this patent application as an open limitation that does not exclude the existence of also unrecited features. The term "lateral" means direction perpendicular to the direction of the first rotational axis of the drive shaft. The features recited in depending claims are mutually freely combinable unless otherwise explicitly stated. The novel features which are considered as characteristic of the invention are set forth in the appended claims

### Brief Description of Drawings

In the following, the invention will be described with reference to the accompanying exemplary, schematic drawings, in which
Figure 1 illustrates a gas valve unit according to an embodiment of the invention,
Figure 2 illustrates a coupling of a gas valve unit according to another embodiment of the invention,
Figure 3 illustrates a gas valve unit according to still another embodiment of the invention,
Figure 4 illustrates a gas valve unit according to still another embodiment of the invention,
Figure 5 illustrates a gas valve unit according to still another embodiment of the invention,
Figure 6 illustrates a coupling of a gas valve unit according to another embodiment of the invention and
Figure 7 illustrates a coupling of a gas valve unit according to another embodiment of the invention.

### Detailed Description of Drawings

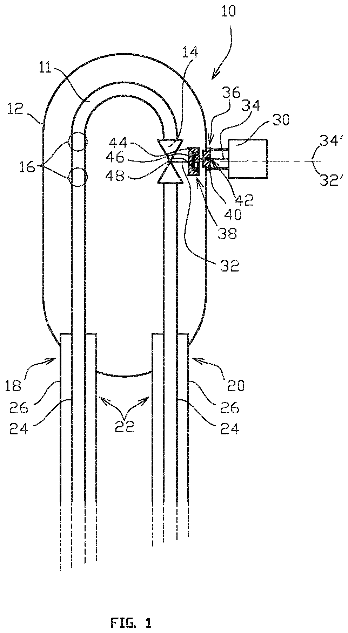

Figure 1 depicts schematically a gas valve unit 10 according to an embodiment of the invention. The gas valve unit is intended to be used in connection with a gas consumer, advantageously a gas fuelled internal combustion piston engine. A fuel system of the engine is provided with a separate gas valve unit (GVU) 10 before, or upstream in gas flow direction of each engine. Certain components of the fuel system, like shut-off valves and pressure regulators, are assembled in centralized manner, into which gas valve unit 10. The gas valve unit comprise an enclosure 12 which is in the embodiment of figure 1 is in a form of a so called pressure vessel. Even if in normal operation of the gas valve unit 10 the space inside the enclosure 12 is not under very high pressure the enclosure 12 is arranged to be pressure proof i.e. it can be constructed as a pressure vessel. This way it can handle safely possible leak of the fuel system. The gas valve unit 10 and particularly the enclosure 12 can be of various forms and it can be mounted in different positions depending e.g. on its form or floor space available. The enclosure 12 encloses a pipe and at least one valve 14 which is connected to the pipe 11 and a number of desired optional instruments or auxiliaries 16 therein. The instruments may comprise necessary equipment for measuring, analysing, filtering or otherwise handling the gas. The gas valve unit 10 further comprises an inlet 18 and an outlet 20 by means of which external piping 22 for the gas delivery system of a gas consumer (not shown) communicates with the enclosure 12 and the valve 14 and the instruments 16 therein. Depending on the actual gas consumer, the gas supplied to the gas consumer may be practically any gas which requires the effects obtainable by the invention, for example natural gas, petroleum gas, synthetic gas, hydrogen or a mixture thereof.

The external piping 22 as well as the inlet 18 and the outlet 20 comprise an inner pipe 24 and an outer pipe 26 which are advantageously arranged coaxially in respect to each other. The inner pipe 24 is connected to the fuel pipe 11 in the enclosure 12 where the valve 14 and a number of desired optional instruments or auxiliary devices 16 are arranged, forming the internal piping. The inner pipe 24 enters into the enclosure 12 via the inlet 18 and forms a continuous gas tight internal piping 11 inside the enclosure 12 before it exits the enclosure via the outlet 20. The outer pipe 26 at the inlet and the outlet is arranged to open into the space of the enclosure 12. The walls of the inner pipe 11 and the enclosure 12 form a space in between which space is in continuous flow communication with the space between the inner pipe 24 and the outer piper 26 of external piping 22.

In addition to the enclosure 12, the outer pipe 26 is also configured to be pressure proof and they connected with each other in gas tight manner. The enclosure is enclosing the pipe 11 and the valve 14. This way a possible leak in the pipe 11, 24, which is the primary flow channel for the gas fuel, can be led safely to a desired handling of the leak gas, such as back to a gas tank via the space inside the outer pipe 26 and the enclosure 12.

The valve 14 is operated by an actuator 30, such as a pneumatic actuator, which is located outside the enclosure 12. The valve has a drive shaft 32 having a first axis of rotation 32'. This way the valve is operable by subjecting a rotational movement to the drive shaft 32 of the valve. The rotational movement of the drive shaft 32 can be provided by an actuating shaft 34 arranged to the gas valve unit 10. The actuating shaft 34 has a second axis of rotation 34'. The actuating shaft 34 is in force transmission connection with the actuator 30. The actuator shaft 34 is adapted to the drive shaft 32 so that the mutual position of the first axis of rotation 32' and the second axis of rotation 34' may change or may be misaligned. As can be seen in the figure 1 the first axis of rotation 32' and the second axis of rotation 34' are substantially parallel with but at a distance from each other. This way the installation of the valve 14 inside the enclosure 12 and the installation of the actuator outside the enclosure 12 tolerates linear or angular misalignment to some extent and thus makes the fabricating and assemble of the valve unit considerably more straightforward. This also absorbs any difference in thermal expansion of the inner pipe 11 and the enclosure 12. Additionally, there is no need to open the enclosure 12 in order to access the actuator 30 for e.g. servicing work.

The gas valve unit 10 comprises a shaft lead-through unit 36, which is releasably connected to an outer wall of the enclosure 10 in gas tight manner. The actuating shaft 34 is arranged rotatably to the shaft lead-through unit 36 so as to extend from inside to outside of the enclosure 12. Also the actuating shaft 34 is sealed to the shaft lead-through unit 36 in a gas tight manner. The shaft lead-through unit 36 comprises a flange part 40 which is provided with a cylindrical opening 42, which may be for example a bore or a releasable sleeve, through which the actuating shaft 34 is extending in supported and sealed manner. The flange part may be provided with additional lead-through system by means of which for example data or electric cables, gas or other fluid, can be led in gas tight manner.

The gas valve unit 10 comprises a force transmission coupling 38, configured to transmit rotational force between the actuating shaft 34 and the drive shaft 32, in such a manner that the first axis of rotation 32' and the second axis of rotation 34' are substantially parallel with but at a distance from each other. Substantially parallel should be understood so that the axes of rotation may form an angle of <= 5 degrees between them.

The shaft lead-through unit 36 is arranged to be assembled and/or disassembled from outside the enclosure. Also the actuating shaft 34 is arranged to be assembled and/or disassembled from outside the enclosure 12 so that it can be coupled to the drive shaft 32. The coupling 38 is configured to allow mutual lateral displacement of the ends of the drive shaft 32 and the actuating shaft 34. In other words the coupling 38 makes it possible that substantially parallel shafts 32,34 need not to be on the same axis of rotation. The coupling 38 comprise a first engagement hub 44 at the end of the drive shaft 32 of the valve 14 and a second engagement hub 46 at the end of the actuating shaft 34 and a floating member 48 between the first and the second engagement hub. The first engagement hub 44, floating member 48 and the second engagement hub 46 are mutually dimensionally formed so as to transmit torque between the engagement hubs via the floating member 48. The floating member 48 is arranged between the first engagement hub 44 and the second engagement hub 46 by means of a form engagement with the engagement hubs. The floating member 48 has a first form engagement with the first engagement hub 44 configured to enable transmission of torque from the floating member to the first engagement hub 44 around an axis which is parallel to the first axis of rotation 32'. The floating member 48 has a second form engagement with the second engagement hub 46 configured to enable transmission of torque from the second engagement hub 46 to the floating member 48 around an axis which is parallel to the first axis of rotation 32' as well. The first form engagement is configured such that the floating member 48 can move in first lateral direction only in respect to the first axis of rotation 32' bounded and ruled by the first form engagement. Also the second form engagement is configured such that the floating member 48 can move in second lateral direction only in respect to the second axis of rotation 34' bounded and ruled by the second form engagement. The first and the second engagement hubs can be rigidly or removable connected to the respective shafts.

The flange part 40 of the lead-though unit 36 is assembled to an opening 50 of the enclosure 14 so as to close the opening and is arranged such that the first axis of rotation 32' is substantially a center axis of the opening. The opening for the lead-through unit is configured large enough such that the second engagement hub 46 can be entered inside the enclosure 12 through the opening.

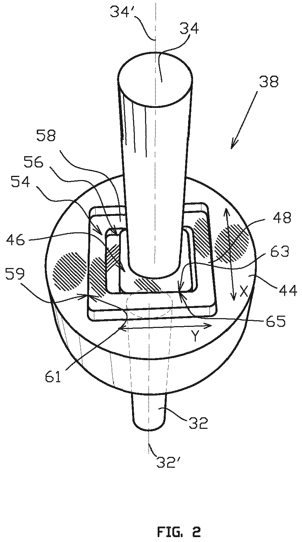

Figure 2 discloses an embodiment of a coupling 38 according to the invention in more detailed manner. The corresponding parts shown in the figure 1 and in the figure 2 are referred to by a corresponding numbers. The coupling 38 is configured to allow mutual lateral displacement of the ends of the drive shaft 32 and the actuating shaft 34. The first engagement hub 44 of the coupling 38 is provided with a lateral rectangular, advantageously square, recess 54 at its end face. The floating member 48 is also rectangular, advantageously square, having its two sides shorter than two opposite sides of the recess 54 such that the floating member 48 is fitted into the recess 54 with a suitable lateral (perpendicular to the first rotational axis) play in a first lateral direction X only. The floating member is provided with rectangular, advantageously square, cut-out through its thickness, or recess 56, circumscribed by a periphery section 58. The second engagement hub 46 at the end of the actuating shaft 34 is also formed to be laterally rectangular, advantageously square, and having a flat end face. The second engagement hub 46 has a side length shorter than the two adjacent sides of the recess 56 in the floating member 48 so that the second engagement hub 46 may be arranged into the recess 56 of the floating member 48. The second engagement hub 46 is fitted into the floating member 48 with a suitable lateral (perpendicular to the first rotational axis) clearance in a second lateral direction Y only. The first and the second lateral directions are perpendicular to each other. A plane defined by the first and the second lateral direction is perpendicular to the first rotational axis 32'. The coupling is configured such that the drive shaft rotates with the same speed and the actuating shaft.

This way the first engagement hub 44, floating member 48 and the second engagement hub 46 are mutually dimensionally formed so as to transmit torque between the engagement hubs via the floating member 48. A laterally outer wall 59 of periphery section 58 of the floating member 48 and laterally inner wall 61 of the recess 56 in the first engagement hub 44 constitutes the first form engagement with the first engagement hub 44 configured to enable transmission of torque from the floating member to the first engagement hub 44. A laterally inner wall 63 of the periphery section 58 of the floating member 48 and laterally outer wall 65 of the second engagement hub 46 constitutes the second form engagement with the second engagement hub 46 configured to enable transmission of torque from the second engagement hub 46 to the floating member 48. The floating member 48 can move laterally in respect to the first axis of rotation 32' bounded and ruled by the first form engagement and the second form engagement. In this embodiment the second engagement hub 46 is arranged to extend axially inside the first engagement hub 44 and the floating member 48. Also the first form engagement and second form engagement are laterally nested or inside each other. In other words the form engagement are substantially at a same axial position, not one after the other. This way the axial length of the coupling 38 is minimized. In the gas valve unit this means in practise that the radial gap between the valve 14 and the wall of the enclosure 12 is also minimized providing space and material savings.

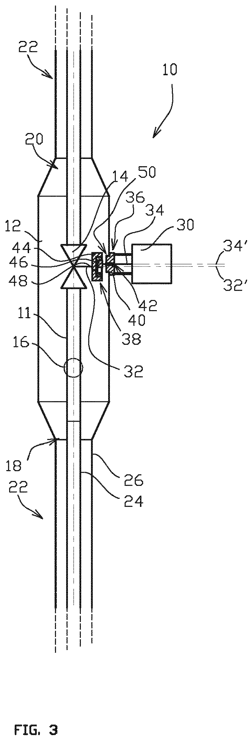

In the figure 3 there is shown a gas valve unit 10 according to another embodiment of the invention which particularly utilizes the advantage of short axial dimension of the coupling 38. The corresponding parts shown in the figure 3 and in the figure 1 are referred to by a corresponding numbers. In the embodiment shown in the figure 3 the gas valve unit comprise an enclosure 12 which is in tubular form arranged coaxially with the pipe 11, but having slightly greater diameter.

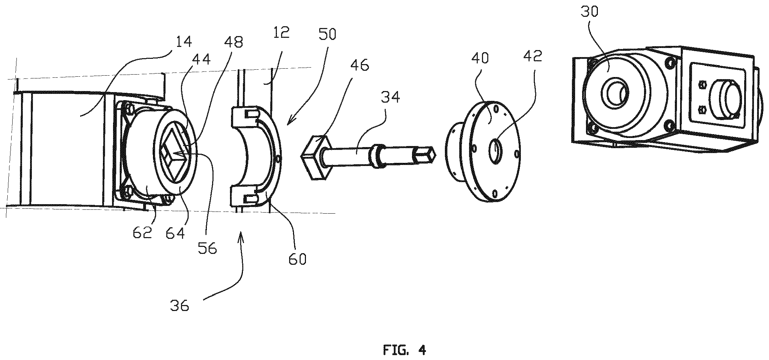

Figure 4 discloses a section of a valve unit according to another embodiment of the invention. Also here the corresponding parts shown in the figure 4 and in the figure 1 are referred to by a corresponding numbers. In the embodiment of the figure 4 the lead-through unit is shown dismantled so that the main parts are separated from each other. In this embodiment the lead-through unit 36 comprises a support sleeve 60 which is rigidly connected e.g. by welding to the enclosure 12. Thus the flange part 40 of the lead-through unit 36 is assembled to an opening of the support sleeve 60. The opening for the flange part 52 of the lead-through unit is configured large enough such that the second engagement hub 46 can be entered inside the enclosure 12 through the opening. Additionally in this embodiment the floating member 48 is retained in the recess of the first engagement hub 48 by a retainer cup 62. The retainer cup comprises a cylindrical sleeve arranged coaxially with the drive shaft 32 of the valve 14 which sleeve is provided with inwardly extending collar 64, which partly cover the floating member 48 and prevents the floating member 48 to come loose of its proper position. Figure 4 also depicts how the valve 14 and/or the actuator 30 can be advantageously assembled and/disassembled according to the invention. In the figure 4 the parts are separated. If the valve 14 has been removed from the pipe 11, the valve 14 is first connected to its position. Provided that the first engagement hub 44 is removably installed to the drive shaft 32, if not already installed, the first engagement hub 44 is attached to the drive shaft 32. Next the floating member 48 is put into its position in the recess of the first engagement hub and the retainer cup 62 is assembled. When the valve 14 is attached properly to the pipe 11, the actuating shaft 34 is taken partly inside the opening either in the enclosure 12 or in the support sleeve 60 so that the second engagement hub is simultaneously taken into the cut-out 56 of the floating member 48. The flange part 40 is assembled to the opening either in the enclosure 12 or in the support sleeve 60 so that the actuating shaft 34 is arranged to extend through the flange part 40. And finally the actuating shaft 34 is coupled to the actuator 30 which is removably connected to e.g. the flange part 40. Disassembly takes place is reverse order.

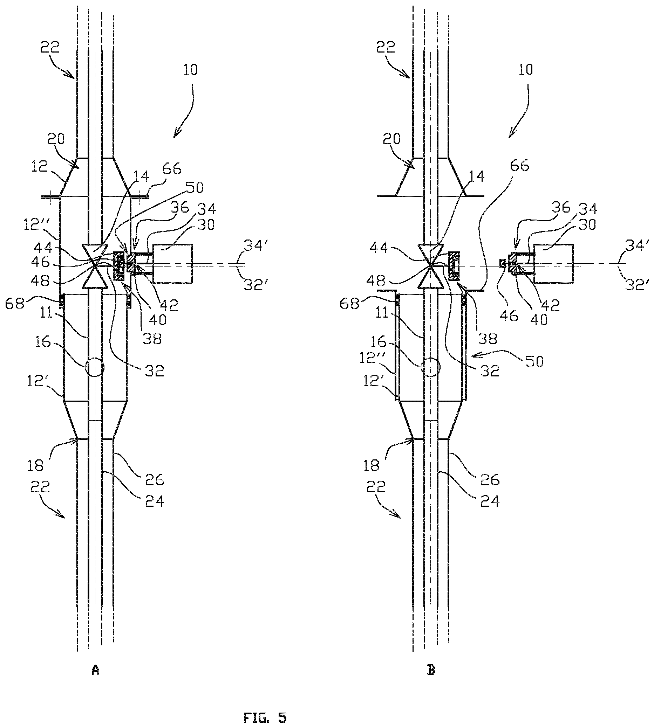

Figure 5 discloses a still another embodiment of the invention, the invention which particularly utilizes the advantage of short axial dimension of the coupling 38, according to the invention. The corresponding parts shown in the figure 5 and in the figure 1 are referred to by a corresponding numbers. In the embodiment shown in the figure 5 the gas valve unit comprise an enclosure 12 which is in tubular form arranged coaxially with the pipe 11, but having slightly greater diameter. The enclosure 12 comprises a tubular body 12' and a sleeve part 12", into the opening 50 of which the shaft lead-through unit 36 is releasably connected. The sleeve part 12" has a diameter different (greater or smaller) from the diameter of the tubular body 12' such that the sleeve part is axially movable in respect to the body part as is shown in the views A and B. The sleeve part 12" is attachable in a sealed manner to the tubular body 12' by a flange 66 or alike. Also the sleeve part 12" is sealed to the body by means of suitable sealing 68, such as o-rings. When the valve 14 needs to be serviced or access is desired for other reasons the flange part 40 is disassembled (view B) from the opening 50 and the actuation shaft 34 and the second engagement hub 46 is taken out of the unit through the opening 50, and now the sleeve part 12" can be moved axially and the access to the valve is provided. According an embodiment of the invention the also the first engagement hub 44 and the floating member 48 can be dimensioned so that one or both of them are removable through the opening 50. In such a case the first engagement hub 44, the floating member 48 and second engagement hub 46 are advantageously configured to follow the flange part 40 when removed.

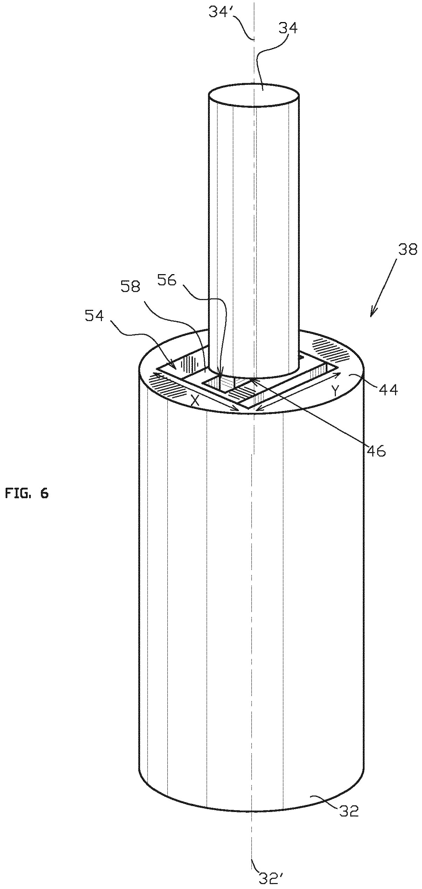

Figure 6 discloses an embodiment of a coupling 38 according to the invention. The coupling corresponds to that shown in the figure 2 and corresponding parts shown in the figure 2 and in the figure 6 are referred to by a corresponding numbers. The coupling 38 is configured to allow mutual lateral displacement of the ends of the drive shaft 32 and the actuating shaft 34. The first engagement hub 44 of the coupling 38 is provided with a lateral rectangular recess 54 at its end face. The first engagement hub 44 has a diameter equal to the drive shaft 32. Here the first engagement hub 44 is an integral part of the drive shaft 32. The floating member 48 is also rectangular having its two sides shorter than two opposite sides of the recess 54 such that the floating member 48 is fitted into the recess 54 with a suitable lateral (perpendicular to the first rotational axis) play in a first lateral direction X only. The floating member is provided with rectangular cut-out through its thickness, or recess 56, circumscribed by a periphery section 58. The second engagement hub 46 at the end of the actuating shaft 34 is also formed to be laterally rectangular, which has lateral dimension smaller or equal to the diameter of the actuating shaft 34. The second engagement hub 46 is fitted into the floating member 48 with a suitable lateral (perpendicular to the first rotational axis) clearance in a second lateral direction Y only. The first and the second lateral directions are perpendicular to each other. A plane defined by the first and the second lateral direction is perpendicular to the first rotational axis 32'.

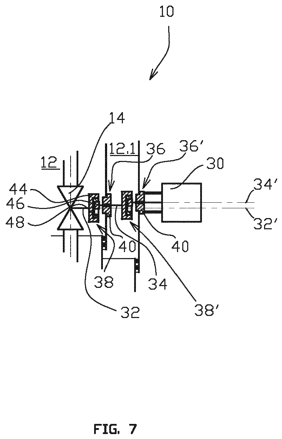

Figure 7 shows an embodiment of the invention where the valve unit comprises an inner enclosure 12 and at least one an outer enclosure 12.1 in which the outer enclosure encloses the inner enclosure 12. This should be understood so that also in the other embodiments of the invention may be provided with nested enclosures. The corresponding parts shown in the figure 7 and in the figure 1 and 5 are referred to by a corresponding numbers. In the embodiment shown in the figure 7 the gas valve unit the enclosures 12, 12.1 are tubular and arranged coaxially with the pipe 11 and each other. The rotational movement of the drive shaft 32 of the valve is accomplished by arranging two force transmission couplings 38 according to the embodiments of figures 1 to 5 in series. Thus the actuating shaft 34 of the first tier coupling is coupled to the force transmission coupling 38' of the second tier coupling. The actuating shaft 34 of the second force transmission coupling 38' is arranged rotatably to the shaft lead-through unit 36' arranged to the wall of the outer enclosure 12.1 so as to extend from inside to outside of the enclosure 12, 12.1. Even if not shown both the transmission couplings can be arranged removably through the opening in the outer enclosure 12.1 as is explained in connection with the figure 5.

In case of a practical circumstances would not require space savings as much as is available using the coupling shown in the figures 1 to 4, the coupling can be realized so that the a first engagement hub 44 at the end of the drive shaft 32 of the valve 14 and the second engagement hub 46 at the end of the actuating shaft 34 are provided with a cross directional groove at their end faces running through the rotational axis. The floating member is a disk like member having cross directional tongues at each face arranged perpendicular to each other. When coupled, the tongue and groove on one side is perpendicular to the tongue and groove on the other. The floating member rotates around its center at the same speed as the actuating shaft and drive shaft.

While the invention has been described herein by way of examples in connection with what are, at present, considered to be the most preferred embodiments, it is to be understood that the invention is not limited to the disclosed embodiments, but is intended to cover various combinations or modifications of its features within the scope of the appended claims. The details mentioned in connection with any embodiment above may be used in connection with another embodiment when such combination is technically feasible, as defined by the appended claims.

## Claims

1. A gas valve unit (10), comprising a pipe (11) and at least one valve (14) arranged to the pipe (11), and a gas tight enclosure (12), enclosing the pipe (11) and the at least one valve (14), and being provided with an inlet (18) and an outlet (20), in which gas valve unit (10) the pipe (11) is arranged to extend inside the enclosure (12) from the inlet (18) of the enclosure (12) to the outlet (20) of the enclosure (12), **characterized in that**
- the valve (14) comprising a drive shaft (32) having a first axis of rotation (32'), and the valve (14) is operable by subjecting a rotational movement to the drive shaft (32) of the valve (14),
- an actuating shaft (34) having a second axis of rotation (34'),
- a shaft lead-through unit (36) releasably connected to the enclosure (12) in gas tight manner, into which shaft lead-through unit (36) the drive shaft (32) is arranged so as to extend from inside to outside of the enclosure (12), and
- the drive shaft (32) and the actuating shaft (34) are arranged in force transmission connection with each other by a coupling (38) which is configured to allow mutual lateral displacement of the ends of the drive shaft (32) and the actuating shaft (34).

2. A gas valve unit (10) according to claim 1, **characterized in that** the shaft lead-through unit (36) comprises a flange part (40) provided with a cylindrical opening (42) into which the drive shaft (32) is assembled rotationally and in gas tight manner.

3. A gas valve unit (10) according to claim 1, **characterized in that** the shaft lead-through unit (36) is configured to be assembled and/or disassembled from outside the enclosure (12).

4. A gas valve unit (10) according to claim 1 or 3, **characterized in that** the actuating shaft (34) is configured to be assembled and/or disassembled from outside the enclosure (12).

5. A gas valve unit (10) according to claim 1, **characterized in that** the coupling (38) comprise a first engagement hub (44) at the end of the drive shaft (32) of the valve (14) and a second engagement hub (46) at the end of the actuating shaft (34) and a floating member (48) between the first and the second engagement hub.

6. A gas valve unit (10) according to claim 5, **characterized in that** the floating member (48) has a first form engagement with the first engagement hub (44) configured to enable transmission of torque between the floating member (48) and the first engagement hub (44), and the floating member (48) has a second form engagement with the second engagement hub (46) configured to enable transmission of torque between the second engagement hub (46) to the floating member (48).

7. A gas valve unit (10) according to claim 6, **characterized in that** the first form engagement is configured such that the floating member (48) is movable in first lateral direction only in respect to the first axis of rotation (32') and the second form engagement is configured such that the floating member (48) is movable in second lateral direction only in respect to the second axis of rotation (34').

8. A gas valve unit (10) according to claim 7, **characterized in that** the first engagement hub (44) of the coupling (38) is provided with a lateral rectangular recess (54) at its end face, and that the floating member (48) is rectangular having its sides shorter than sides of the recess (54) such that the floating member (48) is fitted into the recess (54), and that the floating member is provided with rectangular cut-out (56) circumscribed by a periphery section (58), and that the second engagement hub (46) is formed to be laterally rectangular and it has a side length shorter than the sides of the recess (56) in the floating member (48), and that the second engagement hub (46) is arranged into the recess (56) of the floating member (48).

9. A gas valve unit (10) according to claim 5, **characterized in that** the second engagement hub (46) is arranged to extend axially inside the first engagement hub (44) and the floating member (48).

10. A gas valve unit (10) according to claim 6 and 9.

11. A A gas valve unit (10) according to claim 1, **characterized in that** the enclosure (12) is of tubular form and it is arranged coaxially with the pipe (11).

12. A A gas valve unit (10) according to claim 11, **characterized in that** the enclosure comprises a tubular body and a sleeve part, into which the shaft lead-through unit (36) is releasably connected, the sleeve part having a diameter different from the diameter of the tubular body such that the sleeve part is axially movable in respect to the body part and that the shaft lead-through unit (36) is releasably connected to the sleeve part (12") of the enclosure (12).

13. A gas valve unit (10) according to claim 1, **characterized in that** the enclosure is arranged coaxially with the pipe (11), and that the enclosure comprises a body (12') and a sleeve part (12"), wherein the sleeve part (12") is axially movable in respect to the body part, and that the shaft lead-through unit (36) is releasably connected to the sleeve part (12") of the enclosure (12).

## Patentansprüche

1. Gasventileinheit (10), die ein Rohr (11) und mindestens ein Ventil (14), das an dem Rohr (11) eingerichtet ist, und einen gasdichten Einschluss (12) umfasst, der das Rohr (11) und das mindestens eine Ventil (14) einschließt und mit einem Einlass (18) und einem Auslass (20) versehen ist, wobei in der Gasventileinheit (10) das Rohr (11) eingerichtet ist, um sich innerhalb des Einschlusses (12) von dem Einlass (18) des Einschlusses (12) zu dem Auslass (20) des Einschlusses (12) zu erstrecken,
**dadurch gekennzeichnet, dass**
- das Ventil (14) eine Antriebswelle (32) umfasst, die eine erste Rotationsachse (32') aufweist, und das Ventil (14) durch Auferlegen einer Rotationsbewegung an die Antriebswelle (32) des Ventils (14) betätigbar ist,
- eine Betätigungswelle (34), die eine zweite Rotationsachse (34') aufweist,
- eine Wellendurchführeinheit (36), die lösbar mit dem Einschluss (12) auf gasdichte Weise verbunden ist, in welcher Wellendurchführeinheit (36) die Antriebswelle (32) eingerichtet ist, um sich von innen nach außen des Einschlusses (12) zu erstrecken, und
- die Antriebswelle (32) und die Betätigungswelle (34) in Kraftübertragungsverbindung miteinander durch eine Kopplung (38) eingerichtet sind, die dazu konfiguriert ist, gegenseitige seitliche Verlagerung der Enden der Antriebswelle (32) und der Betätigungswelle (34) zu erlauben.

2. Gasventileinheit (10) nach Anspruch 1, **dadurch gekennzeichnet, dass** die Wellendurchführeinheit (36) ein Flanschteil (40) umfasst, das mit einer zylindrischen Öffnung (42) versehen ist, in die die Antriebswelle (32) drehend und auf eine gasdichte Art zusammengefügt ist.

3. Gasventileinheit (10) nach Anspruch 1, **dadurch gekennzeichnet, dass** die Wellendurchführeinheit (36) dazu konfiguriert ist, von außerhalb des Einschlusses (12) zusammengefügt und/oder auseinandergenommen zu werden.

4. Gasventileinheit (10) nach Anspruch 1 oder 3, **dadurch gekennzeichnet, dass** die Betätigungswelle (34) dazu konfiguriert ist, von außerhalb des Einschlusses (12) zusammengefügt und/oder auseinandergenommen zu werden.

5. Gasventileinheit (10) nach Anspruch 1, **dadurch gekennzeichnet, dass** die Kopplung (38) eine erste Eingriffsnabe (44) an dem Ende der Antriebswelle (32) des Ventils (14) und eine zweite Eingriffsnabe (46) an dem Ende der Betätigungswelle (34) sowie ein schwebendes Element (48) zwischen der ersten und der zweiten Eingriffsnabe umfasst.

6. Gasventileinheit (10) nach Anspruch 5, **dadurch gekennzeichnet, dass** das schwebende Element (48) einen ersten Formeingriff mit der ersten Eingriffsnabe (44) aufweist, der dazu konfiguriert ist, Übertragung von Moment zwischen dem schwebenden Element (48) und der ersten Eingriffsnabe (44) zu ermöglichen, und das schwebende Element (48) einen zweiten Formeingriff mit der zweiten Eingriffsnabe (46) aufweist, der dazu konfiguriert ist, Übertragung von Moment zwischen der zweiten Eingriffsnabe (46) und dem schwebenden Element (48) zu ermöglichen.

7. Gasventileinheit (10) nach Anspruch 6, **dadurch gekennzeichnet, dass** der erste Formeingriff derart konfiguriert ist, dass das schwebende Element (48) in einer ersten seitlichen Richtung nur in Bezug auf die erste Rotationsachse (32') bewegbar ist, und der zweite Formeingriff derart konfiguriert ist, dass das schwebende Element (48) in einer zweiten seitlichen Richtung nur in Bezug auf die zweite Rotationsachse (34') bewegbar ist.

8. Gasventileinheit (10) nach Anspruch 7, **dadurch gekennzeichnet, dass** die erste Eingriffsnabe (44) der Kopplung (38) mit einer seitlichen rechteckigen Vertiefung (54) an ihrer Endfläche versehen ist, und dass das schwebende Element (48) rechteckig ist, wobei seine Seiten derart kürzer sind als die Seiten der Vertiefung (54), dass das schwebende Element (48) in die Vertiefung (54) passt, und dass das schwebende Element mit einem rechteckigen Ausschnitt (56) versehen ist, der von einem Umfangsteilabschnitt (58) umschrieben ist, und dass die zweite Eingriffsnabe (46) dazu gebildet ist, seitlich rechteckig zu sein und sie eine Seitenlänge aufweist, die kürzer ist als die Seiten der Vertiefung (56) in dem schwebenden Element (48), und dass die zweite Eingriffsnabe (46) in der Vertiefung (56) des schwebenden Elements (48) eingerichtet ist.

9. Gasventileinheit (10) nach Anspruch 5, **dadurch gekennzeichnet, dass** die zweite Eingriffsnabe (46) eingerichtet ist, um sich axial innerhalb der ersten Eingriffsnabe (44) und dem schwebenden Element (48) zu erstrecken.

10. Gasventileinheit (10) nach Anspruch 6 und 9.

11. Gasventileinheit (10) nach Anspruch 1, **dadurch gekennzeichnet, dass** der Einschluss (12) Röhrenform aufweist und zu dem Rohr (11) koaxial eingerichtet ist.

12. Gasventileinheit (10) nach Anspruch 11, **dadurch gekennzeichnet, dass** der Einschluss einen Röhrenkörper und einen Hülsenteil umfasst, in den hinein die Wellendurchführeinheit (36) freigebbar verbunden ist, wobei der Hülsenteil einen Durchmesser aufweist, der von dem Durchmesser des Röhrenkörpers derart unterschiedlich ist, dass der Hülsenteil axial in Bezug auf den Körperteil bewegbar ist, und dass die Wellendurchführeinheit (36) freigebbar mit dem Hülsenteil (12") des Einschlusses (12) verbunden ist.

13. Gasventileinheit (10) nach Anspruch 1, **dadurch gekennzeichnet, dass** der Einschluss koaxial zu dem Rohr (11) eingerichtet ist, und dass der Einschluss einen Körper (12') und einen Hülsenteil (12") umfasst, wobei der Hülsenteil (12") in Bezug zu dem Körperteil axial bewegbar ist, und dass die Wellendurchführeinheit (36) freigebbar mit dem Hülsenteil (12") des Einschlusses (12) verbunden ist.

## Revendications

1. Unité de soupape de gaz (10), comprenant un tuyau (11) et au moins une soupape (14) disposée sur le tuyau (11), et une enceinte étanche au gaz (12), renfermant le tuyau (11) et la au moins une soupape (14), et étant pourvue d'une entrée (18) et d'une sortie (20), dans laquelle unité de soupape de gaz (10) le tuyau (11) est agencé pour s'étendre à l'intérieur de l'enceinte (12) depuis l'entrée (18) de l'enceinte (12) jusqu'à la sortie (20) de l'enceinte (12),
**caractérisé en ce que**
- la soupape (14) comprenant un arbre d'entraînement (32) ayant un premier axe de rotation (32'), et la soupape (14) peut être actionnée en appliquant un mouvement de rotation à l'arbre d'entraînement (32) de la soupape (14),
- un arbre d'actionnement (34) ayant un deuxième axe de rotation (34'),
- une unité de passage d'arbre (36) raccordée de manière réversible à l'enceinte (12) de manière étanche au gaz, dans laquelle l'arbre d'entraînement (32) est agencé de manière à s'étendre de l'intérieur vers l'extérieur de l'enceinte (12) dans l'unité de passage d'arbre (36), et
- l'arbre d'entraînement (32) et l'arbre d'actionnement (34) sont agencés en liaison de transmission de force l'un avec l'autre par un accouplement (38) qui est configuré pour permettre un déplacement latéral mutuel des extrémités de l'arbre d'entraînement (32) et de l'arbre d'actionnement (34).

2. Unité de soupape de gaz (10) selon la revendication 1, **caractérisée en ce que** la passage d'arbre (36) comprend une partie de bride (40) munie d'une ouverture cylindrique (42) dans laquelle l'arbre d'entraînement (32) est assemblé en rotation et de manière étanche aux gaz.

3. Unité de soupape de gaz (10) selon la revendication 1, **caractérisée en ce que** le bloc passage d'arbre (36) est configuré pour être monté et/ou démonté depuis l'extérieur de l'enceinte (12).

4. Unité de soupape de gaz (10) selon la revendication 1 ou 3, **caractérisée en ce que** l'arbre d'actionnement (34) est configuré pour être monté et/ou démonté depuis l'extérieur de l'enceinte (12).

5. Unité de soupape de gaz (10) selon la revendication 1, **caractérisée en ce que** l'accouplement (38) comprend un premier moyeu de mise en prise (44) à l'extrémité de l'arbre d'entraînement (32) de la soupape (14) et un deuxième moyeu de mise en prise (46) à l'extrémité de l'arbre d'actionnement (34) et un élément flottant (48) entre le premier et le deuxième moyeu de mise en prise.

6. Unité de soupape de gaz (10) selon la revendication 5, **caractérisée en ce que** le l'élément flottant (48) possède une première forme de mise en prise avec le premier moyeu de mise en prise (44) configuré pour permettre la transmission de couple entre l'élément flottant (48) et le premier moyeu de mise en prise (44), et l'élément flottant (48) possède une deuxième forme de mise en prise avec le deuxième moyeu de mise en prise (46) configuré pour permettre la transmission du couple entre le deuxième moyeu de mise en prise (46) et l'élément flottant (48).

7. Unité de soupape de gaz (10) selon la revendication 6, **caractérisée en ce que** la première forme de mise en prise est configurée de sorte que l'élément flottant (48) soit mobile dans une première direction latérale uniquement par rapport au premier axe de rotation (32') et la deuxième forme de mise en prise est configurée de sorte que l'élément flottant (48) soit mobile dans la deuxième direction latérale uniquement par rapport au deuxième axe de rotation (34').

8. Unité de soupape de gaz (10) selon la revendication 7, **caractérisée en ce que** le premier moyeu de mise en prise (44) de l'accouplement (38) est muni d'un évidement rectangulaire latéral (54) à sa face frontale, et que l'élément flottant (48) est rectangulaire en ayant ses côtés plus courts que les côtés de l'évidement (54) de telle sorte que l'élément flottant (48) soit ajusté dans l'évidement (54), et que l'élément flottant soit pourvu d'une découpe rectangulaire (56) circonscrit par une section périphérique (58), et **en ce que** le deuxième moyeu de mise en prise (46) soit formé pour être latéralement rectangulaire et il possède une longueur de côté plus courte que les côtés de l'évidement (56) dans l'élément flottant (48), et **en ce que** le deuxième moyeu de mise en prise (46) soit agencé dans l'évidement (56) de l'élément flottant (48).

9. Unité de soupape de gaz (10) selon la revendication 5, **caractérisée en ce que** le deuxième moyeu de mise en prise (46) est agencé pour s'étendre axialement à l'intérieur du premier moyeu de mise en prise (44) et l'élément flottant (48).

10. Unité de soupape de gaz (10) selon les revendications 6 et 9.

11. Unité de soupape de gaz (10) selon la revendication 1, **caractérisée en ce que** l'enceinte (12) est de forme tubulaire et est disposée coaxialement au tuyau (11).

12. Unité de soupape de gaz (10) selon la revendication 11, **caractérisée en ce que** l'enceinte comprend un corps tubulaire et une partie de manchon, dans laquelle l'unité de passage d'arbre (36) est raccordée de manière réversible, la partie de manchon possédant un diamètre différent du diamètre du corps tubulaire tel que la partie manchon soit mobile axialement par rapport à la partie de corps et que l'unité de passage d'arbre (36) soit raccordée de manière réversible à la partie de manchon (12") de l'enceinte (12).

13. Unité de soupape de gaz (10) selon la revendication 1, **caractérisée en ce que** l'enceinte soit agencée coaxialement à la conduite (11), et que l'enceinte comprend un corps (12') et une partie de manchon (12"), dans lequel la partie de manchon (12'') est mobile axialement par rapport à la partie de corps, et **en ce que** l'unité de passage d'arbre (36) est raccordée de manière réversible à la partie de manchon (12") de l'enceinte (12).
